# EUROPEAN PATENT SPECIFICATION

(11) **EP 1 416 808 B1**
(45) Date of publication and mention of the grant of the patent: **04.10.2006**
(21) Application number: 02751441.3
(22) Date of filing: 16.08.2002
(51) Int. Cl.: A23K 1/16, A23K 1/18

(54) **USE OF SINGLE-CELL PROTEIN AS FEED FOR FISH AND SHELLFISH**
VERWENDUNG VON EINZELLIGEM PROTEINMATERIAL ALS FUTTER FÜR FISCHE UND SCHALENTIERE
PROTEINE UNICELLULAIRE UTILISEE DANS L'ALIMENTATION DES POISSONS ET CRUSTACES

(30) Priority: 16.08.2001 GB 0120047
(43) Date of publication of application: 12.05.2004
(73) Proprietor: Norferm DA, 4068 Stavanger (NO)
(72) Inventor: KLEPPE, Gunnar, N-4044 Hafrsfjord (NO)
(74) Representative: Golding, Louise Ann
(86) International application number: PCT/GB2002/003795
(87) International publication number: WO 2003/015534

(56) References cited:
- EP-A- 0 241 583
- EP-A- 0 292 052
- WO-A-00/35299
- WO-A-01/60974
- US-A- 5 314 820
- COLIN E. NASH & VIDAR JULIEN: "Aquavision 1998. 2. Nutreco Aquaculture Business Conference" 1998 , NUTRECO AQUACULTURE , STAVANGER, NORWAY XP008010744 page 75 -page 78
- J.A. NELL: "Comparison of some single cell proteins in the diet of the Sydney rock oyster (Saccostrea commercialis)" PROGRESSIVE FISH-CULTURIST, vol. 47, no. 2, 1985, pages 110-113, XP001126929 WASHINGTON, DC, US ISSN: 0033-0779
- K.G. MANJU ET AL.: "Effect of bacteria and actinomycetes on growth of juveniles of Macrobrachium idella (Hilgendorf)" INDIAN JOURNAL OF EXPERIMENTAL BIOLOGY., vol. 35, no. 1, 1997, pages 53-55, XP008010721 XX, XX ISSN: 0019-5189
- DATABASE WPI Section Ch, Week 200114 Derwent Publications Ltd., London, GB; Class D13, AN 2001-123586 XP002222069 & CN 1 146 290 A (WANG S), 2 April 1997 (1997-04-02)

## Description

The present invention relates to a feed material for fish and shellfish, for example a feed material for molluscs such as mussels. In particular, the invention relates to the use of single-cell protein materials and their derivatives as a feed for fish and shellfish.

Single-cell microorganisms such as fungi, yeasts and bacteria have been proposed as new sources of protein in human foods and as certain animal feeds, e.g. feeds for chickens, pigs, etc. These may be grown by single-cell reproduction and several bio-synthetic processes for the production of protein through the growth of single-cell microorganisms on hydrocarbon and other substrates have been developed. For example, PCT/GB01/00628 (published as WO 01/60974), DK 1404/92, EP-A-418187 and EP-A-306466 describe various methods and apparatus suitable for the production of such materials. The entire contents of each of these documents is incorporated herein by reference.

It has now been found that protein-containing microorganisms (also referred to herein as "single-cell proteins") and derivatives thereof, especially homogenized and autolysed derivatives, may be used as fish and shellfish feed. Particularly effective fish and shellfish feeds may be produced using the biomass harvested from a culture medium comprising methanotrophic bacteria, e.g. biomass produced as described in WO 01/60974, and derivatives thereof.

Viewed from one aspect the invention thus provides the use of a single-cell protein material or derivative thereof (e.g. a homogenized or autolysed derivative of a single-cell protein material) as a fish or shellfish feed or feed additive.

In a further aspect the invention provides the use of a single-cell protein material or derivative thereof (e.g. a homogenized or autolysed derivative of a single-cell protein material) in the manufacture of a fish or shellfish feed, or in the manufacture of a fish or shellfish feed additive.

As used herein the term "derivative" when used in relation to a single-cell protein material, e.g. a microbial culture, includes any product which may be derived from such a material using a downstream processing technique or techniques (e.g. a series of techniques) known in the art, such as separation of a single-cell protein material from a fermentation medium or liquid by centrifugation and/or ultrafiltration methods, or by dewatering, etc. Such techniques also include those which may be used to break down the single-cell material (e.g. the bacterial cells), such as homogenization and/or autolysis.

As used herein, the term "homogenized" when used in relation to a single-cell protein material is intended to define such a material in which a substantial proportion (e.g. substantially all) of the cells are broken down, i.e. disrupted or disintegrated, e.g. as a result of mechanical disruption. Such homogenized materials will generally consist of a viscous protein slurry containing both soluble and particulate cellular components.

The term "autolysis" as used herein is intended to encompass a process in which endogenous enzymes contained within a cell, such as nucleases and proteases, digest the components of the cell.

A preferred aspect of the invention relates to the use of the products herein described as a feed material for shellfish, for example in shellfish cultivation. Examples of shellfish to which the products herein described may be fed include mussels, oysters, scallops, etc.

Surprisingly, it has been found that the products herein described are particularly effective in improving (e.g. increasing the rate of) detoxification or decontamination of shellfish (especially mussels) contaminated by toxic algae. For example, these may be used to detoxify toxic algae-containing shellfish to levels that are non-toxic to human beings.

In a yet further aspect the invention thus provides a method of detoxifying shellfish (e.g. mussels), said method comprising supplying to said fish an effective amount of a single-cell protein material or derivative thereof as herein described.

The product herein described may also be used in feeding marine fish, particularly white fish such as cod. For example, this may find use as a feed for fish which are bred for human consumption and may therefore be used in fish farming.

Other fish which may be fed with the material herein described are those kept in aquariums. Such fish include those kept for exhibition or as pets for pleasure, e.g. goldfish, koi carp, tropical fish, etc.

Preferred single-cell protein materials for use in the invention are homogenized single-cell protein materials such as those described in PCT/GB01/00628 (WO 01/60974), the entire contents of which are incorporated herein by reference. However, the basic single-cell protein material described in this reference (i.e. that which has not been subjected to homogenization) may also be used. In this regard, although the material produced in the fermentor may be directly used as the feed material (or feed additive) without further processing, this will generally be subjected to additional downstream processing steps, such as for example centrifugation and/or filtration (e.g. ultrafiltration) processes. Both homogenized and non-homogenized materials will typically be subjected to dewatering (e.g. spray drying) and optionally sterilization prior to use as a feed material or feed additive. A dried homogenizate of the bacterial biomass described in WO 01/60974 is a particularly preferred material for use in accordance with the present invention.

Single-cell protein materials, e.g. bacterial cultures, which have been subjected to autolysis to break down the cells are also suitable for use in the invention. Such a treatment and the resulting autolysates are described, for example, in British Patent Application No. 0203307.4 filed 12 February 2002, the content of which is incorporated herein by reference (copy attached hereto). The autolysate, more especially the dried autolysate, described in this earlier application is considered particularly suitable for the preparation of feed materials in accordance with the invention.

Particularly preferably, the single-cell protein material for use in the invention will be derived from a microbial culture which comprises at least one methanotrophic bacteria optionally in combination with one or more species of heterotrophic bacteria, especially preferably a combination of methanotrophic and heterotrophic bacteria. Preferably these will be grown in the same culture medium, e.g. using a loop reactor provided with methane, oxygen, ammonia and mineral feeds. Such materials and processes for their preparation are described in PCT/GB01/00628 (WO 01/60974) the entire contents of which are incorporated herein by reference. One particularly suitable combination of bacteria for generating a biomass for use in the invention is *Methylococcus* capsulatus (Bath) (strain NCIMB 11132), in combination with *Ralstonia sp.* DB3 (strain NCIMB 13287) and *Brevibacillus agri* DB5 (strain NCIMB 13289), optionally together with *Aneurinibacillus sp.* DB4 (strain NCIMB 13288) .

The bacterial culture used to produce the biomass is preferably at least 50%, more preferably at least 60%, especially at least 70%, in particular at least 750, e.g. 75 to 95%, more particularly 75 to 80%, by weight methanotrophic bacteria (relative to the total bacterial weight) .

As used herein, the term "methanotrophic" encompasses any bacterium which utilizes methane, methanol or formaldehyde for growth. The term "heterotrophic" is used for bacteria that utilize organic substrates other than methane, methanol or formaldehyde for growth.

The bacterial biomass for use in the invention may be formed by growth of the bacteria on a suitable medium or substrate. The exact nature of the growth medium used to produce the biomass is not critical and a variety of suitable substrates may be used. Conveniently, the biomass may be produced by a fermentation process in which oxygen and a suitable substrate such as a liquid or gaseous hydrocarbon, an alcohol or carbohydrate, e.g. methane, methanol or natural gas, together with a nutrient mineral solution are fed to a tubular reactor containing the microorganisms. Such a process is described, for example, in WO 01/60974.

A particularly preferred biomass material for use in the present invention is that derived from fermentation on hydrocarbon fractions, particularly preferably that derived from fermentation on natural gas.

For use as a fish or shellfish feed, appropriate amounts of the material herein described will depend on several factors, such as the species of fish or shellfish for which the product is intended. However, such amounts can readily be determined by those skilled in the art.

For most applications, especially for feeding shellfish, the feed will be supplied in particulate form (e.g. as granules or in powder form). For feeding shellfish, the particles will typically be added to seawater which is then circulated through the holding tanks. Suitable particle sizes may range from 0.5 to 20 µm. However, feeds in the form of a liquid (e.g. as an aqueous slurry) may also be used and are considered suitable for use in feeding shellfish, especially shellfish which are attached to a culture rope.

In a still further aspect the invention thus provides a liquid feed for shellfish (e.g. mussels), said feed comprising an aqueous slurry of a single-cell protein or derivative thereof as herein described.

The invention will now be described in more detail by way of the following Examples:

### Example 1 - Biomass Extracts

Methanotrophic and heterotrophic bacteria (*Methylococcus capsulatus* (Bath) (strain NCIMB 11132), *Ralstonia sp.* DB3 (strain NCIMB 13287), *Brevibacillus agri* DB5 (strain NCIMB 13289), and *Aneurinibacillus sp.* DB4 (strain NCIMB 13288)) are cultivated as described in WO 01/60974 and the resulting biomass harvested and treated as described in WO 01/60974 to produce a spray-dried, particulate homogenizate, and as described in British Patent Application No. 0203307.4 to produce a spray dried autolysate.

### Example 2 - Feeding Shellfish

The homogenizate produced in Example 1 is suspended in sea water at a concentration of from 10 to 1,000 ppm. This suspension of feed is then circulated through a tank containing shellfish (e.g. mussels, oysters or scallops) for a period of from 1 to 3 weeks.

The same feeding regimen may be carried out utilising the autolysate material of Example 1.

## Claims

1. Use of an autolysed derivative of a single-cell protein material as a fish or shellfish feed or feed additive.

2. Use of an autolysed derivative of a single-cell protein material in the manufacture of a fish or shellfish feed, or in the manufacture of a fish or shellfish feed additive.

3. A method of detoxifying shellfish, said method comprising supplying to said shellfish an effective amount of a single-cell protein material or derivative thereof.

4. A method as claimed in claim 3, wherein said derivative is a homogenized or autolysed derivative of a single-cell protein material.

5. A method as claimed in claim 3 or claim 4, wherein said shellfish are mussels.

6. A use or method as claimed in any one of claims 1 to 5, wherein said single-cell protein material is derived from the biomass of a culture of bacteria including methanotrophic bacteria, and optionally at least one species of heterotrophic bacteria.

7. A use or method as claimed in-claim 6, wherein said culture comprises *Methylococcus capsulatus* (Bath) (strain NCIMB 11132), *Ralstonia sp*. DB3 (strain NCIMB 13287) and *Brevibacillus agri* DB5 (strain NCIMB 13289), optionally in combination with *Aneurinibacillus* sp. DB4 (strain NCIMB 13288).

8. A use or method as claimed in claim 6 or claim 7, wherein said culture is produced by fermentation on hydrocarbon fractions or on natural gas, preferably from fermentation on natural gas.

9. Use as a shellfish feed or shellfish feed additive of a single-cell protein material which is derived from the biomass of a culture of bacteria comprising *Methylococcus capsulatus* (Bath) (strain NCIMB 11132), *Ralstonia sp.* DB3 (strain NCIMB 13287) and *Brevibacillus agri* DB5 (strain NCIMB 13289), optionally in combination with *Aneurinibacillus sp.* DB4 (strain NCIMB 13288).

## Patentansprüche

1. Verwendung eines der Autolyse unterzogenen Derivats eines einzelligen Proteinmaterials als Futter für Fische oder Schalentiere oder als Futterzusatzstoff.

2. Verwendung eines der Autolyse unterzogenen Derivats eines einzelligen Proteinmaterials bei der Herstellung von Futter für Fische oder Schalentiere oder bei der Herstellung eines Futterzusatzstoffes für Fische oder Schalentiere.

3. Verfahren zum Entgiften von Schalentieren, wobei das Verfahren umfaßt, daß den Schalentieren eine wirksame Menge eines einzelligen Proteinmaterials oder eines Derivats davon zugeführt wird.

4. Verfahren nach Anspruch 3, wobei das Derivat ein homogenisiertes oder der Autolyse unterzogenen Derivat eines einzelligen Proteinmaterials ist.

5. Verfahren nach den Ansprüchen 3 oder 4, wobei die Schalentiere Muscheln sind.

6. Verwendung oder Verfahren nach einem der Ansprüche 1 bis 5, wobei das einzellige Proteinmaterial von der Biomasse einer Bakterienkultur stammt, die methanotrophe Bakterien und gegebenenfalls zumindest eine Spezies von heterotrophen Bakterien einschließt.

7. Verwendung oder Verfahren nach Anspruch 6, wobei die Kultur Methylococcus capsulatus (Bad) (Stamm NCIMB 11132), Ralstonia sp. DB3 (Stamm NCIMB 13287) und Brevibacillus agri DB5 (Stamm NCIMB 13289), gegebenenfalls in Kombination mit Aneurinibacillus sp. DB4 (Stamm NCIMB 13288) umfaßt.

8. Verwendung oder Verfahren nach Anspruch 6 oder Anspruch 7, wobei die Kultur durch Fermentation auf Kohlenwasserstofffraktionen oder Naturgas, vorzugsweise aus der Fermentation auf Naturgas, erzeugt wird.

9. Verwendung eines einzelligen Proteinmaterials, das von der Biomasse einer Bakterienkultur stammt, dieMethylococcus capsulatus (Bad) (Stamm NCIMB 11132), Ralstonia sp. DB3 (Stamm NCIMB 13287) und Brevibacillus agri DB5 (Stamm NCIMB 13289), gegebenenfalls in Kombination mit Aneurinibacillus sp. DB4 (Stamm NCIMB 13288) umfaßt, als Futter für Schalentiere oder als Futterzusatzstoff für Schalentiere.

## Revendications

1. Utilisation d'un dérivé autolysé d'un matériau protéique unicellulaire comme aliment ou additif alimentaire pour les poissons ou les crustacés.

2. Utilisation d'un dérivé autolysé d'un matériau protéique unicellulaire dans la fabrication d'un aliment pour les poissons ou les crustacés, ou dans la fabrication d'un additif alimentaire pour les poissons ou les crustacés.

3. Procédé de détoxification des crustacés, ledit procédé comprenant la fourniture auxdits crustacés d'une quantité efficace d'un matériau protéique unicellulaire ou d'un de ses dérivés.

4. Procédé selon la revendication 3, dans lequel ledit dérivé est un dérivé homogénéisé ou autolysé d'un matériau protéique unicellulaire.

5. Procédé selon la revendication 3 ou la revendication 4, dans lequel lesdits crustacés sont des moules.

6. Utilisation ou procédé selon l'une quelconque des revendications 1 à 5, dans lequel ledit matériau protéique unicellulaire est dérivé de la biomasse d'une culture de bactéries incluant des bactéries méthanotrophes, et facultativement au moins une espèce de bactéries hétérotrophes.

7. Utilisation ou procédé selon la revendication 6, dans lequel ladite culture comprend *Methylococcus capsulatus* (Bath) (souche NCIMB 11132), *Ralstonia sp.* DB3 (souche NCIMB 13287) et *Brevibacillus agri* DB5 (souche NCIMB 13289), facultativement en association avec *Aneurinibacillus sp.* DB4 (souche NCIMB 13288).

8. Utilisation ou procédé selon la revendication 6 ou la revendication 7, dans lequel ladite culture est produite par fermentation sur des fractions d'hydrocarbure ou sur gaz naturel, de préférence par fermentation sur gaz naturel.

9. Utilisation, comme aliment pour les crustacés ou comme additif alimentaire pour les crustacés, d'un matériau protéique unicellulaire dérivé de la biomasse d'une culture de bactéries comprenant *Methylococcus capsulatus* (Bath) (souche NCIMB 11132), *Ralstonia sp.* DB3 (souche NCIMB 13287) et *Brevibacillus agri* DB5 (souche NCIMB 13289), facultativement en association avec *Aneurinibacillus sp.* DB4 (souche NCIMB 13288).
